# EUROPÄISCHE PATENTSCHRIFT

(11) **EP 3 470 638 B1**
(45) Veröffentlichungstag und Bekanntmachung des Hinweises auf die Patenterteilung: **09.09.2020**
(21) Anmeldenummer: 18197113.6
(22) Anmeldetag: 27.09.2018
(51) Int. Cl.: F01N 3/04

(54) **VERFAHREN ZUM BETREIBEN EINER BRENNKRAFTMASCHINE, BRENNKRAFTMASCHINE UND KRAFTFAHRZEUG**
COMBUSTION ENGINE, MOTOR VEHICLE AND METHOD FOR OPERATING A COMBUSTION ENGINE
PROCÉDÉ DE FONCTIONNEMENT D'UN MOTEUR À COMBUSTION INTERNE, MOTEUR À COMBUSTION INTERNE ET VÉHICULE AUTOMOBILE

(30) Priorität: 10.10.2017 DE 102017123466
(43) Veröffentlichungstag der Anmeldung: 17.04.2019
(73) Patentinhaber: VOLKSWAGEN AKTIENGESELLSCHAFT, 38440 Wolfsburg (DE)
(72) Erfinder: KIEL, Marco, 39116 Magdeburg (DE); LOOF, Holger, 38173 Sickte (DE)
(74) Vertreter: Bungartz, Florian

(56) Entgegenhaltungen:
- EP-A1- 1 882 829
- EP-A2- 1 403 480
- WO-A1-2009/078847
- DE-A1-102005 058 020
- DE-A1-102008 008 495
- DE-T5-112014 001 722

## Beschreibung

Die Erfindung betrifft ein Verfahren zum Betreiben einer Brennkraftmaschine, eine zur Durchführung eines solchen Verfahrens geeignete Brennkraftmaschine sowie ein Kraftfahrzeug mit einer solchen Brennkraftmaschine.

Eine Brennkraftmaschine für ein Kraftfahrzeug weist in der Regel ein Kühlsystem auf, in dem ein Kühlmittel mittels einer oder mehrerer Kühlmittelpumpen in mindestens einem Kühlkreis gefördert wird und dabei Wärmeenergie von in den Kühlkreis integrierten Komponenten, u.a. einem Verbrennungsmotor, aufnimmt. Diese Wärmeenergie wird, sofern ein Betriebstemperaturbereich der Brennkraftmaschine bereits erreicht wurde, anschließend in einem Umgebungswärmetauscher, dem sogenannten Hauptkühler, sowie zeitweise in einem Heizungswärmetauscher an die Umgebungsluft, im Fall des Heizungswärmetauschers an die zur Klimatisierung eines Innenraums des Kraftfahrzeugs vorgesehene Umgebungsluft, abgegeben.

Eine Brennkraftmaschine für ein Kraftfahrzeug kann weiterhin eine Abgasrückführung aufweisen, mittels der ein Teil des von einem Verbrennungsmotor der Brennkraftmaschine erzeugten Abgases aus einem Abgasstrang der Brennkraftmaschine in einen Frischgasstrang der Brennkraftmaschine und über diesen in den Verbrennungsmotor zurück geführt werden kann, wodurch insbesondere bestimmte Schadstoffemissionen im Betrieb der Brennkraftmaschine gering gehalten werden sollen. Bekannt ist der Einsatz einer sogenannten Hochdruck-Abgasrückführung, bei der die Abgasrückführung stromauf einer in den Abgasstrang integrierten Turbine eines Abgasturboladers aus dem Abgasstrang abzweigt und stromab eines in den Frischgasstrang integrierten Verdichters des Abgasturboladers in den Frischgasstrang mündet. Weiterhin ist der Einsatz einer sogenannten Niederdruck-Abgasrückführung bekannt, bei der die Abgasrückführung stromab der Turbine eines Abgasturboladers aus dem Abgasstrang abzweigt und stromauf des Verdichters des Abgasturboladers in den Frischgasstrang mündet. Um eine zu hohe Temperatur des dem Verbrennungsmotor zugeführten Frischgases, bei dem es sich bei aktivierter Abgasrückführung um ein Luft-Abgas-Gemisch handelt, zu vermeiden, kann vorgesehen sein, dass in eine Abgasrückführleitung ein (AGR-)Kühler integriert ist, der als Wärmetauscher einen Übergang von Wärmeenergie von dem rückzuführenden Abgas auf ein den Wärmetauscher ebenfalls durchströmendes Kühlmittel ermöglicht. Üblicherweise ist ein derartiger AGR-Kühler in ein auch Kühlkanäle des Verbrennungsmotors umfassendes Kühlsystem der Brennkraftmaschine integriert.

Eine Brennkraftmaschine für ein Kraftfahrzeug kann weiterhin einen NOₓ-Speicherkatalysator und/oder einen Partikelfilter umfassen, die in den Abgasstrang der Brennkraftmaschine integriert sind und die der Reduzierung von Schadstoffen in dem Abgas, das bei Verbrennungsprozessen in einem Verbrennungsmotor der Brennkraftmaschine erzeugt und über den Abgasstrang in die Umgebung abgeführt werden soll, dienen. Konkret werden in einem NOₓ-Speicherkatalysator Stickoxide (NOₓ) in bestimmten Betriebszuständen des Verbrennungsmotors, in denen deren Reduktion zu Stickstoff (N) und Sauerstoff (O2) nicht möglich ist, gespeichert, während ein Partikelfilter (Ruß-)Partikel aus dem Abgasstrom herausfiltert. Sowohl für NOₓ-Speicherkatalysatoren als auch für Partikelfilter gilt, dass diese beim Erreichen einer definierten Beladungsgrenze regeneriert werden müssen, um deren Funktionsfähigkeit aufrecht zu erhalten. Bei einem NOₓ-Speicherkatalysator kommt hinzu, dass dieser in regelmäßigen Abständen entschwefelt werden muss, was auch als Desulfatisierung bezeichnet wird. Dies ist erforderlich, weil der üblicherweise im Kraftstoff enthaltene Schwefel mit dem Speichermaterial des NOₓ-Speicherkatalysators reagiert, wodurch die für die NOₓ-Speicherung verfügbare Menge an Speichermaterial abnimmt. Dabei entstehen Sulfate (z.B. Bariumsulfat), die sehr temperaturbeständig sind und bei den für eine NOₓ-Regeneration einzustellenden Abgastemperaturen nicht abgebaut werden. Zur Entschwefelung muss ein NOₓ-Speicherkatalysator unter anderem durch gezielte Maßnahmen auf Temperaturen, die in der Regel zwischen 600°C und 650°C liegen, aufgeheizt werden. Vergleichbare Temperaturen sind auch für eine Regeneration eines Partikelfilters erforderlich, sofern nicht durch die Zugabe eines Additivs eine Verringerung der Oxidationstemperatur der Rußpartikel realisiert wird.

Das Aufheizen eines NOₓ-Speicherkatalysators und/oder eines Partikelfilters auf die für eine Entschwefelung beziehungsweise Regeneration erforderlichen Temperaturen erfolgt in der Regel durch eine entsprechende Erhöhung der Temperatur des Abgases, wofür verschiedene, insbesondere innermotorische Maßnahmen bekannt sind. Ein Problem, dass sich bei einer solchen Entschwefelung/Regeneration aufgrund der relativ hohen Abgastemperaturen einstellt, liegt darin, dass dabei eine erhebliche thermische Leistung in das Kühlsystem der Brennkraftmaschine und insbesondere in den Verbrennungsmotor eingetragen wird. Dies ist insbesondere dann der Fall, wenn die Brennkraftmaschine eine Abgasrückführung vorsieht, weil das Einleiten der beschriebenen Abgastemperaturerhöhung als Maßnahme für eine Entschwefelung eines NOₓ-Speicherkatalysators und für eine Regeneration eines Partikelfilters insbesondere dann erforderlich ist, wenn der Verbrennungsmotor mit relativ niedrigen Lasten und Drehzahlen betrieben wird. In derartigen Betriebszuständen wird jedoch auch in der Regel ein erheblicher Anteil des Abgases in den Frischgasstrang rückgeführt und dabei mittels in das Kühlsystem integriertem/n AGR-Kühler(n) gekühlt.

Die DE 199 48 148 A1 offenbart ein Kraftfahrzeug mit einer Brennkraftmaschine, die einen in einen Abgasstrang integrierten NOₓ-Speicherkatalysator aufweist. Zur Erzielung eines möglichst vorteilhaften Betriebs des NOₓ-Speicherkatalysators wird bei einem Betrieb eines Verbrennungsmotors der Brennkraftmaschine, der zu relativ hohen Abgastemperaturen führt, ein Abschnitt des Abgasstrangs stromauf des NOₓ-Speicherkatalysators mittels einer einstellbaren Luftströmung gekühlt.

Die GB 2507342 B offenbart ein Verfahren zur Ermittlung einer Rußbeladung eines Partikelfilters, welcher in einem Abgasstrang einer Brennkraftmaschine angeordnet ist. Dabei wird in einer instationären Betriebssituation ein Rußeintrag in den Partikelfilter ermittelt, indem der Rußeintrag für einen entsprechenden stationären Betriebspunkt bestimmt und dieser so korrigiert wird, dass eine Abweichung des Rußeintrags infolge der instationären Betriebssituation berücksichtigt wird.

Die EP 1 882 829 A1 offenbart ein Verfahren zum Regenerieren eines Partikelfilters einer Brennkraftmaschine eines Kraftfahrzeugs, bei dem ein Klimagerät des Kraftfahrzeugs deaktiviert wird, wenn infolge einer erhöhten Abgastemperatur, die gezielt für ein Regenerieren des Partikelfilters eingestellt wurde, eine thermische Überlastung des Kühlmittels zu befürchten ist. Durch die Deaktivierung des Klimageräts soll ein zusätzlicher Wärmeeintrag durch dieses Klimagerät in das Kühlmittel vermieden werden.

Die WO 2009/078847 A1 offenbart ein Verfahren zum Betreiben einer Brennkraftmaschine, bei der die Temperatur der Ladeluft dadurch beeinflusst wird, dass die Fließrate von Kühlflüssigkeit durch einen Ladeluftkühler beeinflusst wird

Die DE 10 2005 058 020 A1 offenbart ein Verfahren zum Betreiben einer Brennkraftmaschine, bei dem zur Regeneration eines Partikelfilters eine Abgastemperatur auf einen relativ hohen Wert eingestellt wird. Das Steuern eines Kühlerventilators wird dabei so angepasst, dass eine solche Regeneration des Partikelfilters unterstützt wird.

Die EP 1 403 480 A2 beschreibt ein Verfahren zum Betreiben einer Brennkraftmaschine, bei dem ein primärer Fokus im Betrieb nach einem Kaltstart der Brennkraftmaschine in einem Aufwärmen eines Katalysators noch vor einem Aufwärmen eines Verbrennungsmotors der Brennkraftmaschine liegt. Im Rahmen der Steuerung der Temperatur des Verbrennungsmotors kann auch proaktiv der Kühlmittelmassenstrom beeinflusst werden kann, um einer erwarteten Temperaturänderung entgegenzuwirken.

Die DE 10 2008 108 495 A1 offenbart eine Diesel-Brennkraftmaschine mit einem in einen Abgasstrang der Brennkraftmaschine integrierten Partikelfilter. Für eine Regeneration des Partikelfilters muss die Temperatur des diesen durchströmenden Abgases temporär erhöht werden, was bei einer Ausgestaltung eines Verbrennungsmotors der Brennkraftmaschine als Dieselmotor wegen dessen relativ hohen Wirkungsgrads schwierig sei. Zur Lösung dieser Problematik wird vorgeschlagen, die Kühlleistungen verschiedener Kühler eines Kühlsystems der Brennkraftmaschine, deren Kühlfunktionalitäten Einfluss auf die Temperatur des Abgases haben, temporär für eine Regeneration des Partikelfilters zu verringern oder vollständig zu deaktivieren. Konkret soll dazu ein AGR-Kühler mittels eines Bypasses umgangen und die Kühlleistungen eines Ladeluftkühlers sowie eines gegebenenfalls vorhandenen Abgaskrümmerkühlers reduziert werden.

Die DE 11 2014 001 722 T5 beschreibt ein Verfahren zur Steuerung eines Kühlsystems eines Kraftfahrzeugs, bei dem in Abhängigkeit von einer Geschwindigkeitsvorhersage sowie einer Temperaturvorhersage Schwankungen der Temperatur eines in einen Kühlmittelkühler einströmenden Kühlmittels und/oder die Höhe des Flusses des Kühlmittels in den Kühlmittelkühler reduziert wird/werden, wenn die Temperaturableitung dT/dt für diese Einlasstemperatur einen Grenzwert überschreitet. Dadurch sollen thermische Wechselbeanspruchungen für insbesondere den Kühlmittelkühler gering gehalten werden. Dabei könne auch eine Vorhersage eines Wärmeübergangs von in das Kühlsystem integrierten Komponenten berücksichtigt werden, wobei ein Thermostat, das zur Steuerung des Kühlmittelflusses vorgesehen ist, auf kontrollierter Weise öffnen soll, bevor die Kühlflüssigkeitstemperatur ansteigen kann.

Der Erfindung lag die Aufgabe zugrunde, bei einer Brennkraftmaschine, die einen Verbrennungsmotor, ein Kühlsystem, gegebenenfalls eine Abgasrückführleitung mit einem AGR-Kühler, der in das Kühlsystem eingebunden ist, und einen Abgasstrang mit einem darin integrierten NOx-Speicherkatalysator und/oder einem darin integrierten Partikelfilter umfasst, eine thermische Überlastung des Verbrennungsmotor und/oder des Kühlsystems infolge einer Entschwefelung des NOx-Speicherkatalysators und/oder einer Regeneration des Partikelfilters zu vermeiden.

Diese Aufgabe wird durch ein Verfahren zum Betreiben einer Brennkraftmaschine gemäß dem Patentanspruch 1 gelöst. Eine zur automatisierten Durchführung eines solchen Verfahrens geeignete Brennkraftmaschine sowie ein Kraftfahrzeug mit einer solchen Brennkraftmaschine sind Gegenstände der Patentansprüche 7 und 9. Vorteilhafte Ausführungsformen des erfindungsgemäßen Verfahrens und bevorzugte Ausgestaltungsformen der erfindungsgemäßen Brennkraftmaschine und damit auch des erfindungsgemäßen Kraftfahrzeugs sind Gegenstände der weiteren Patentansprüche und/oder ergeben sich aus der nachfolgenden Beschreibung der Erfindung.

Der Erfindung liegt der Gedanke zu Grunde, eine thermische Überlastung eines Verbrennungsmotors und/oder eines Kühlsystems einer Brennkraftmaschine infolge einer Erhöhung der Temperatur des Abgases, die als Maßnahme für die Entschwefelung eines NOₓ-Speicherkatalysators und/oder für eine Regeneration eines Partikelfilters vorgesehen ist, dadurch zu vermeiden, dass vor und/oder während dieser Maßnahme gezielt die Kühlleistung für das das Kühlsystem durchströmende Kühlmittel erhöht wird, um eine Absenkung einer Temperatur des Kühlmittels auf einen Wertebereich zu erreichen, der unterhalb dessen liegt, was normalerweise, d.h. ohne dieses Maßnahme, für den Betrieb der Brennkraftmaschine in einem entsprechenden Betriebszustand des Verbrennungsmotors vorgesehen wäre.

Dementsprechend ist erfindungsgemäß ein Verfahren zum Betreiben einer Brennkraftmaschine, die zumindest einen Verbrennungsmotor (insbesondere einen Dieselmotor oder einen Ottomotor oder eine Kombination daraus, d.h. z.B. einen Verbrennungsmotor mit homogener Kompressionszündung), einen Frischgasstrang, einen Abgasstrang und ein einen Umgebungswärmetauscher sowie einen Kühlkanal des Verbrennungsmotors umfassendes Kühlsystem aufweist, wobei in den Abgasstrang ein NOₓ-Speicherkatalysator und/oder ein Partikelfilter integriert ist und wobei als Maßnahme für eine Entschwefelung des NOₓ-Speicherkatalysators und/oder für eine Regeneration des Partikelfilters temporär die Temperatur des den Abgasstrang durchströmenden Abgases auf mindestens einen für die (jeweilige) Maßnahme erforderlichen Mindestwert eingestellt wird. Um eine thermische Überlastung des Verbrennungsmotors und/oder des Kühlsystems (wobei insbesondere ein lokales Sieden des Kühlmittels vermieden werden soll) infolge eines Eintrags einer relativ hohen thermischen Leistung aufgrund der relativ hohen Temperaturen des Abgases, die insbesondere durch innermotorische Maßnahmen erzielt werden und demnach direkt zu einer entsprechenden Erwärmung des Verbrennungsmotors führen können, zu vermeiden, ist weiterhin vorgesehen, dass für und demnach (unmittelbar) vor und/oder während der Maßnahme für die Entschwefelung des NOₓ-Speicherkatalysators und/oder für die Regeneration des Partikelfilters durch eine Erhöhung der Kühlleistung für das in dem Kühlsystem strömende Kühlmittel die Temperatur des Kühlmittels an einer Stelle stromab, vorzugsweise unmittelbar stromab des Umgebungswärmetauschers, bei dem es sich insbesondere um den Hauptkühler des Kühlsystems handeln kann, und/oder stromauf, vorzugsweise unmittelbar stromauf des Verbrennungsmotors auf einen Wertebereich abgesenkt wird, der unterhalb dessen liegt, was an dieser Stelle ohne die Maßnahme für die Entschwefelung des NOₓ-Speicherkatalysators und/oder für die Regeneration des Partikelfilters in einem entsprechenden Betriebszustand des Verbrennungsmotors vorgesehen ist. Die dortige Temperatur des Kühlmittels ist für die sich einstellenden Temperaturbereiche der zu kühlenden, in das Kühlsystem integrierten Komponenten ausschlaggebend.

Eine erfindungsgemäße Brennkraftmaschine umfasst dazu zumindest einen Verbrennungsmotor, einen Frischgasstrang , einen Abgasstrang und ein einen Umgebungswärmetauscher sowie einen Kühlkanal des Verbrennungsmotors umfassendes Kühlsystem, wobei in den Abgasstrang ein NOₓ-Speicherkatalysator und/oder ein Partikelfilter integriert ist. Weiterhin ist eine Steuerungsvorrichtung vorgesehen, die derart ausgebildet ist, dass diese ein erfindungsgemäßes Verfahren ausführen kann. Zudem kann eine erfindungsgemäße Brennkraftmaschine an der genannten Stelle einen in das Kühlsystem integrierten Temperatursensor aufweisen. Es kann aber auch eine Anordnung des Temperatursensors beziehungsweise eine Messung der Temperatur des Kühlmittels stromab oder in einem Austritt des Kühlkanals des Verbrennungsmotors vorgesehen sein.

Das Bewirken einer Absenkung der Temperatur des Kühlmittels kann vorzugsweise kurzfristig vor oder unmittelbar mit oder kurzfristig nach dem Beenden der Maßnahme für die Entschwefelung des NOₓ-Speicherkatalysators und/oder für die Regeneration des Partikelfilters wieder beendet werden, um zu vermeiden, dass beispielsweise der Verbrennungsmotor im Normalbetrieb (d.h. ohne Durchführung der Maßnahme für die Entschwefelung des NOₓ-Speicherkatalysators und/oder für eine Regeneration des Partikelfilters) infolge einer abgesenkten Temperatur des Kühlmittels eine Betriebstemperatur aufweist, die unterhalb eines für den Normalbetrieb vorgesehen, als Optimum ausgelegten Betriebstemperaturbereichs liegt.

Das erfindungsgemäße Verfahren kann insbesondere dann sinnvoll umsetzbar sein, wenn während der als Maßnahme für die Entschwefelung des NOₓ-Speicherkatalysators und/oder für die Regeneration des Partikelfilters vorgesehenen Erhöhung der Temperatur des Abgases Abgas über eine Abgasrückführleitung, die einen in das Kühlsystems integrierten AGR-Kühler umfasst und die aus dem Abgasstrang abgeht und in den Frischgasstrang mündet, geleitet wird, weil dabei über den AGR Kühler infolge der relativ hohen Temperatur des rückzuführenden Abgases eine erhebliche thermische Leistung in das Kühlsystem eingetragen wird. In diesem Fall kann vorzugsweise vorgesehen sein, dass die Temperatur des in einem den AGR-Kühler und weiterhin bevorzugt auch den Verbrennungsmotor umfassenden Kühlkreis des Kühlsystems strömenden Kühlmittels erfindungsgemäß abgesenkt wird. Eine erfindungsgemäße Brennkraftmaschine kann dementsprechend eine Abgasrückführleitung aufweisen, die aus dem Abgasstrang abgeht und in den Frischgasstrang mündet, wobei die Abgasrückführleitung einen in das Kühlsystems integrierten AGR-Kühler umfasst. Sofern die Brennkraftmaschine, wie es vorzugsweise vorgesehen ist, als mittels mindestens eines Abgasturboladers aufgeladen ausgebildet ist, kann die Abgasrückführleitung sowohl Teil einer Hochdruck-Abgasrückführung (HD- AGR) als auch einer Niederdruck-Abgasrückführung (ND-AGR) sein. Besonders bevorzugt kann sowohl eine Hochdruck-Abgasrückführung als auch eine Niederdruck-Abgasrückführung vorgesehen sein.

Sofern eine Abgasrückführung vorgesehen ist, kann es sinnvoll sein, das erfindungsgemäße Absenken der Temperatur des in dem Kühlsystem strömenden Kühlmittels nur dann durchzuführen, wenn das Abgas in einem Mengenstromanteil, der oberhalb eines definierten Grenzwerts liegt (z.B. mindestens 50% von dem insgesamt über den Abgasstrang geführten Abgasstrom), über die Abgasrückführleitung geführt wird, weil nur dann von dem Einbringen einer derart hohen thermischen Leistung in das Kühlsystem auszugehen ist, dass dies ein entsprechendes kompensierendes Vorgehen notwendig oder zumindest sinnvoll macht. Eine erfindungsgemäße Brennkraftmaschine kann dementsprechend Mittel zur Ermittlung (beispielsweise zur Messung) des über die Abgasrückführleitung geführten Mengenstromanteils des Abgases aufweisen.

Vorzugsweise kann auch vorgesehen sein, das Ausmaß, mit dem ein Absenken der Temperatur des Kühlmittels durchgeführt wird, in Abhängigkeit von dem Mengenstromanteil des Abgases, der über die Abgasrückführleitung geführt wird, zu variieren. Dadurch kann eine möglichst optimale Kompensation der erhöhten thermischen Leistung, die infolge der als Maßnahme für die Entschwefelung des NOx-Speicherkatalysators und/oder für die Regeneration des Partikelfilters erhöhten Temperatur des Abgases in das Kühlsystem eingetragen wird, erreicht werden.

Das Absenken der Temperatur des Kühlmittels kann vorzugsweise
- durch eine Erhöhung desjenigen Anteils des Kühlmittels, der über den Umgebungswärmetauscher geführt wird, im Vergleich zu demjenigen Anteil, der über einen den Umgebungswärmetauscher umgehenden Bypass (des Kühlsystems der erfindungsgemäßen Brennkraftmaschine) geführt wird, und/oder
- durch eine Erhöhung der Förderleistung eines dem Umgebungswärmetauscher zugeordneten Gebläses (der erfindungsgemäßen Brennkraftmaschine) bewirkt werden. Folglich kann das Absenken der Temperatur des Kühlmittels ausschließlich durch die Verwendung von Komponenten des Kühlsystems, die dieses in der Regel ohnehin umfasst, erreicht werden.

Eine weitere Möglichkeit, eine lokale thermische Überlastung bis hin zu einem Sieden des Kühlmittels zu vermeiden, die grundsätzlich unabhängig von den übrigen hier beschriebenen Maßnahmen ist, mit diesem jedoch vorzugsweise kombiniert zur Anwendung kommt, liegt darin, im Betrieb des Kühlsystems ein definiertes Druckniveau für das Kühlmittel aufrecht zu halten, weil die Siedetemperatur druckabhängig ist und dabei mit zunehmendem Druck ansteigt. Bei einem geschlossenen Kühlsystem, wie es derzeit vielfach bei Brennkraftmaschinen für Kraftfahrzeuge zum Einsatz kommt, erhöht sich der Druck ausgehend von einem Kaltstart der Brennkraftmaschine bis zum Erreichen des vorgesehenen Betriebstemperaturbereichs für das Kühlmittel, wobei durch das Vorsehen eines geschlossenen Ausgleichsbehälters der Druckanstieg begrenzt, infolge der Komprimierung des darin befindlichen Gases jedoch nicht vollständig entlastet wird, wie dies bei einem offenen Kühlsystem beziehungsweise Ausgleichsbehälter der Fall ist. Weist das Kühlmittel beispielsweise kurz nach einem Kaltstart der Brennkraftmaschine noch eine relativ niedrige Temperatur auf, ist auch dessen Druck im Kühlsystem noch relativ niedrig. Wird dann, beispielsweise durch eine sehr hohe Lastanforderung an den Verbrennungsmotor, lokal und insbesondere in einem Zylinderkopf des Verbrennungsmotors eine hohe thermische Leistung in das Kühlmittel eingetragen, besteht dort lokal die Gefahr des Siedens des Kühlmittels, wodurch dieses geschädigt werden kann. Um dies zu vermeiden, kann vorgesehen sein, dass in einem Zustand des Kühlsystems während eines Betriebs der Brennkraftmaschine ein definiertes Druckniveau, das infolge einer noch zu geringen Temperatur des Kühlmittels noch nicht erreicht ist, aktiv durch eine oder mehrere geeignete Druckerzeugungsvorrichtungen zu erzeugen. Eine solche Druckerzeugungsvorrichtung kann dabei insbesondere in Abhängigkeit von dem Messsignal eines Drucksensors, der vorzugsweise den Gasdruck in einem Ausgleichsbehälter des Kühlsystems ermittelt, angesteuert werden. Eine solche aktive Beeinflussung des Drucks des Kühlmittels kann insbesondere durch eine entsprechende Ansteuerung einer oder mehrerer Kühlmittelpumpen des Kühlsystems, die insbesondere elektromotorisch oder auf sonstige Weise unabhängig von dem Verbrennungsmotor antreibbar sind, gegebenenfalls in Kombination mit ansteuerbaren Drosseln oder sonstigen Strömungswiderständen erreicht werden. Alternativ oder ergänzend kann vorzugsweise auch eine Druckerzeugungsvorrichtung vorgesehen sein, durch die der Druck des in dem Ausgleichsbehälter enthaltenen Gases beeinflusst werden kann. Hierzu kann eine solche Druckerzeugungsvorrichtung eine Gasfördervorrichtung, insbesondere einen Verdichter, umfassen, durch den zusätzliches Gas mit dem Ziel der Erhöhung des Gasdrucks in den Ausgleichsbehälter einbringbar ist. Eine solche Druckerzeugungsvorrichtung kann weiterhin bevorzugt ein ansteuerbares Ventil aufweisen, wodurch der Gasdruck in dem Ausgleichsbehälter auch wieder gezielt reduziert werden kann. Alternativ oder ergänzend kann eine entsprechende Druckerzeugungsvorrichtung auch Mittel vorsehen, durch die das Volumen und damit der Druck des in dem Ausgleichsbehälter enthaltenen Gases beeinflusst werden kann. Derartige Mittel können beispielsweise eine das Gasvolumen zumindest teilweise begrenzende Wand, insbesondere in Form einer Membran, aufweisen, die mittels einer Betätigungsvorrichtung verschiebbar ist, um das Gasvolumen zu verändern.

Ein erfindungsgemäßes Kraftfahrzeug umfasst zumindest eine erfindungsgemäße Brennkraftmaschine, die vorzugsweise zur Erzeugung einer Fahrantriebsleistung für das Kraftfahrzeug vorgesehen ist. Bei dem Kraftfahrzeug kann es sich insbesondere um ein radbasiertes Kraftfahrzeug (vorzugsweise PKW oder LKW) handeln.

Die unbestimmten Artikel ("ein", "eine", "einer" und "eines"), insbesondere in den Patentansprüchen und in der die Patentansprüche allgemein erläuternden Beschreibung, sind als solche und nicht als Zahlwörter zu verstehen. Entsprechend damit konkretisierte Komponenten sind somit so zu verstehen, dass diese mindestens einmal vorhanden sind und mehrfach vorhanden sein können.

Die Erfindung wird nachfolgend anhand eines in den Zeichnungen dargestellten Ausgestaltungsbeispiels näher erläutert. In den Zeichnungen zeigt:
- Fig. 1:: ein erfindungsgemäßes Kraftfahrzeug; und
- Fig. 2:: eine erfindungsgemäße Brennkraftmaschine schematisch in einem Schaltbild.

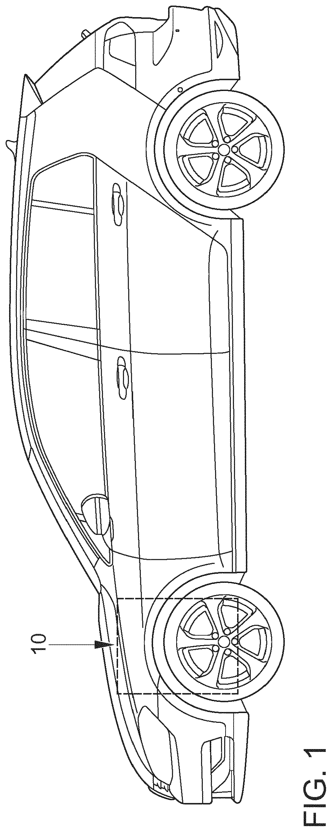

Die Fig. 1 zeigt ein erfindungsgemäßes Kraftfahrzeug mit einer erfindungsgemäßen Brennkraftmaschine 10.

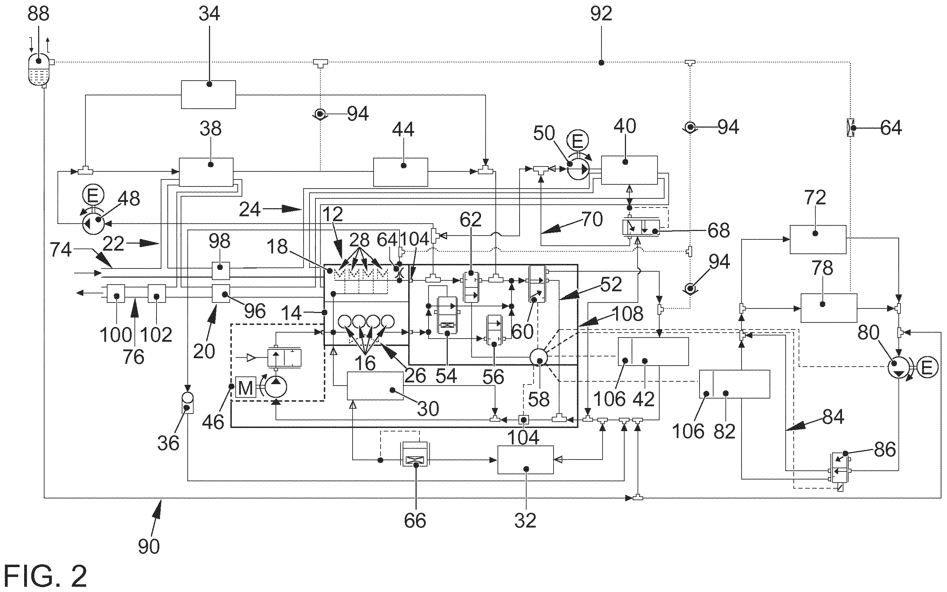

Eine solche erfindungsgemäße Brennkraftmaschine 10 kann gemäß der Fig. 2 einen Verbrennungsmotor 12 aufweisen, der insbesondere als nach dem Diesel-Prinzip arbeitender Hubkolben-Verbrennungsmotor ausgebildet sein kann und der ein Zylindergehäuse 14 mit darin ausgebildeten Zylindern 16 sowie einen Zylinderkopf 18 umfasst. Weiterhin weist die Brennkraftmaschine 10 gemäß der Fig. 2 noch ein Hauptkühlsystem und ein Nebenkühlsystem auf.

Das Hauptkühlsystem dient einer (direkten) Kühlung des Verbrennungsmotors 12, von Motoröl zur Schmierung des Verbrennungsmotors 12, von (Getriebe-)ÖI eines dem Verbrennungsmotor 12 zugeordneten (manuellen oder automatischen) Schaltgetriebes (nicht dargestellt), eines Abgasturboladers 20, insbesondere eines Lagerstuhls oder einer Abgasturbine 96 des Abgasturboladers 20, sowie von Abgas, das entweder über eine Abgasrückführleitung 22 einer Niederdruck-Abgasrückführung oder eine Abgasrückführleitung 24 einer Hochdruck-Abgasrückführung rückgeführt wird. Das Hauptkühlsystem umfasst hierzu Kühlkanäle 26, 28 des Zylindergehäuses 14 und des Zylinderkopfs 18, einen Motorölkühler 30, einen Getriebeölkühler 32, einen Kühler für den Abgasturbolader 20, konkret einen Kühlkanal der Abgasturbine 96 des Abgasturboladers (ATL-Kühler) 34, einen Kühler für ein (bzw. einen Kühlkanal in einem) Abgasrückführventil 36 sowie jeweils einen AGR-Kühler in der Abgasrückführleitung 22 der Niederdruck-Abgasrückführung (ND-AGR-Kühler 38) und der Abgasrückführleitung 24 der Hochdruck-Abgasrückführung (HD-AGR-Kühler 40). Weiterhin umfasst das Hauptkühlsystem einen Hauptkühler 42, drei Kühlmittelpumpen 46, 48, 50 sowie einen Heizungswärmetauscher 44. Der Hauptkühler 42 dient dazu, das diesen durchströmende Kühlmittel durch den Übergang von Wärmeenergie auf Umgebungsluft, die den Hauptkühler 42 ebenfalls durchströmt, rückzukühlen. Der Heizungswärmetauscher 44 dient dagegen dazu, bei Bedarf Umgebungsluft, die zur Klimatisierung eines Innenraums eines die Brennkraftmaschine 10 umfassenden Kraftfahrzeugs (gemäß beispielsweise der Fig. 1) vorgesehene Luft aufzuwärmen und dadurch zu temperieren. Von den drei Kühlmittelpumpen 46, 48, 50 des Hauptkühlsystems ist eine als Hauptkühlmittelpumpe 46 vorgesehen, die entweder elektromotorisch oder, vorzugsweise, direkt oder indirekt von einer Abtriebswelle (insbesondere einer Kurbelwelle; nicht dargestellt) des Verbrennungsmotors 12, d.h. mechanisch, angetrieben sein kann. Auch bei einem solchen mechanischen Antrieb der Hauptkühlmittelpumpe 46 kann diese hinsichtlich der spezifischen (d.h. jeweils auf die Antriebsdrehzahl bezogenen) Förderleistung steuerbar oder regelbar sowie zudem abschaltbar (d.h. dann trotz Drehantriebs ohne relevante Förderleistung erzeugend) ausgebildet sein. Dabei kann vorgesehen sein, dass im abgeschalteten Zustand der Hauptkühlmittelpumpe 46 deren Durchströmung verhindert oder ermöglicht ist. Die zwei weiteren (Zusatz-)Kühlmittelpumpen 48, 50 des Hauptkühlsystems sind dagegen elektromotorisch angetrieben.

Die verschiedenen Wärmetauschkomponenten sowie die Kühlmittelpumpen 46, 48, 50 sind in verschiedene Kühlkreise des Hauptkühlsystems integriert. Ein Hauptkühlkreis umfasst die Kühlkanäle 26, 28 des Zylinderkopfs 18 und des Zylindergehäuses 14, den Hauptkühler 42, einen den Hauptkühler 42 umgehenden Bypass 52 und die Hauptkühlmittelpumpe 46. Die Kühlkanäle 26, 28 des Zylinderkopfs 18 und des Zylindergehäuses 14 sind dabei parallel in den Hauptkühlkreis integriert. Mittels einer ersten Steuervorrichtung 54 in Form eines (selbsttätig regelnden) Thermostatventils (Öffnungstemperatur: 105 °C) sowie mittels einer zweiten Steuervorrichtung 56 in Form eines mittels einer Steuerungsvorrichtung 58 ansteuerbaren Steuerventils kann beeinflusst werden, ob und in welchem Ausmaß auch der Kühlkanal 26 des Zylindergehäuses 14 von dem Kühlmittel durchströmt wird, wenn der Kühlkanal 28 des Zylinderkopfs 18 durchströmt wird. Mittels einer dritten Steuervorrichtung 60, die ebenfalls in Form eines mittels der Steuerungsvorrichtung 58 ansteuerbaren Steuerventils ausgebildet ist, kann beeinflusst werden, ob und, wenn ja, in welchem Ausmaß Kühlmittel, das u.a. in dem Hauptkühlkreis strömt, über den Hauptkühler 42 oder den dazugehörigen Bypass 52 geführt wird. Die erste, zweite und dritte Steuervorrichtung 54, 56, 60 sowie eine vierte Steuervorrichtung 62 stellen jeweils Teil eines Kühlmittelverteilermoduls 108 dar.

Weiterhin ist ein erster Nebenkühlkreis vorgesehen, der eine Nebenstrecke umfasst, die unmittelbar stromab (bezogen auf eine vorgesehene Strömungsrichtung des Kühlmittels in dem Hauptkühlkreis) eines Auslasses des Kühlkanals 28 des Zylinderkopfs 18 aus einem Abschnitt des Hauptkühlkreises abgeht und stromauf der dritten Steuervorrichtung 60 wieder in einen Abschnitt des Hauptkühlkreises mündet. Der Abschnitt des Hauptkühlkreises zwischen dem Abzweig und der Mündung dieser Nebenstrecke des ersten Nebenkühlkreises ist mittels der vierten Steuervorrichtung 62, die in Form eines mittels der Steuerungsvorrichtung 58 ansteuerbaren Steuerventils ausgebildet ist, verschließbar, so dass bedarfsweise mittels dieser vierten Steuervorrichtung 62 eine Durchströmung dieses Abschnitts des Hauptkühlkreises (und damit des Hauptkühlkreises insgesamt) unterbunden werden kann. In den ersten Nebenkühlkreis ist eine erste (48) der Zusatzkühlmittelpumpen 48, 50 integriert. Stromab bezüglich dieser ersten Zusatzkühlmittelpumpe 48 teilt sich der erste Nebenkühlkreis in zwei parallel verlaufende Stränge auf, wobei in einen ersten dieser Stränge der ND-AGR-Kühler 38 und stromab davon der Heizungswärmetauscher 44 integriert sind, und in den zweiten Strang der ATL-Kühler 34 integriert ist. Die zwei Stränge der Nebenstrecke des ersten Nebenkühlkreises werden vor deren Mündung in den Hauptkühlkreis wieder zusammengeführt.

Das Hauptkühlsystem umfasst weiterhin einen zweiten Nebenkühlkreis. Eine Nebenstrecke des zweiten Nebenkühlkreises, in die der Kühler (Kühlkanal) für das Abgasrückführventil 36 integriert ist, geht in der Nähe des Auslasses des Kühlkanals 28 des Zylinderkopfs 18 ab, wobei in diesen Abzweig eine Drossel 64 zur Begrenzung der Menge des den zweiten Nebenkühlkreis durchströmenden Kühlmittels integriert ist. Die Nebenstrecke des zweiten Nebenkühlkreises mündet stromauf der Hauptkühlmittelpumpe 46 (sowie stromab des Hauptkühlers 42 und stromauf der Mündung des zu dem Hauptkühler 42 gehörenden Bypasses 52) in einen Abschnitt des Hauptkühlkreises.

Ein dritter Nebenkühlkreis umfasst eine Nebenstrecke, die im Bereich der Verzweigung zwischen den Kühlkanälen 26, 28 des Zylinderkopfs 18 und des Zylindergehäuses 14 abgeht und stromauf der Hauptkühlmittelpumpe 46 (sowie stromab des Hauptkühlers 42 und der Mündung des zu dem Hauptkühler 42 gehörenden Bypasses 52) wieder in einen Abschnitt des Hauptkühlkreises mündet. In diese Nebenstrecke ist der Motorölkühler 30 integriert.

Ein vierter Nebenkühlkreis umfasst eine Nebenstrecke, die aus der Nebenstrecke des dritten Nebenkühlkreises abgeht und die eine fünfte Steuervorrichtung 66 in Form eines Thermostatventils (Öffnungstemperatur: z.B. 75 °C) sowie den Getriebeölkühler 32 integriert. Die Nebenstrecke des vierten Nebenkühlkreises mündet ebenfalls stromauf der Hauptkühlmittelpumpe 46 (sowie stromab des Hauptkühlers 42 und stromauf der Mündung des zu dem Hauptkühler 42 gehörenden Bypasses 52) in einen Abschnitt des Hauptkühlkreises.

Ein fünfter Nebenkühlkreis des Hauptkühlsystems umfasst eine Nebenstrecke, die stromauf der ersten Zusatzkühlmittelpumpe 48 aus der Nebenstrecke des ersten Nebenkühlkreises abgeht und die die zweite Zusatzkühlmittelpumpe 50 sowie stromab davon den HD-AGR-Kühler 40 integriert. Stromab des HD-AGR-Kühlers 40 ist eine sechste Steuervorrichtung 68 in Form eines Thermostatventils (Umschalttemperatur z.B. zwischen 70°C und 80°C) angeordnet. Mittels dieser sechsten Steuervorrichtung kann Kühlmittel, das den HD-AGR-Kühler 40 durchströmt hat, temperaturabhängig auf entweder einen Endabschnitt der Nebenstrecke des AGR-Kühlkreises oder auf eine Kurzschlussleitung 70, die stromauf der zweiten Zusatzkühlmittelpumpe 50 in einen Anfangsabschnitt der Nebenstrecke des fünften Nebenkühlkreises mündet, aufgeteilt werden.

Das Nebenkühlsystem dient einer Kühlung des mittels eines Verdichters 98 des Abgasturboladers 20 aufgeladenen Frischgases (Ladeluft), das dem Verbrennungsmotor 12 über einen Frischgasstrang 74 der Brennkraftmaschine 10 zugeführt wird, sowie eines Dosierventils 72, mittels dessen ein Reduktionsmittel in Abgas, das einen Abgasstrang 76 der Brennkraftmaschine 10 durchströmt, eingebracht werden kann, um mittels selektiver katalytischer Reduktion eine Verringerung von Schadstoffen, insbesondere von Stickoxiden, des Abgases zu erreichen. Der zur Kühlung der Ladeluft vorgesehene Ladeluftkühler 78 einerseits und der zur Kühlung des Dosierventils 72 vorgesehene Kühlkanal andererseits sind in parallele Stränge eines Kühlkreises des Nebenkühlsystems integriert. Weiterhin ist in diesen Kühlkreis (in demjenigen Abschnitt, der nicht in die zwei Stränge aufgeteilt ist) eine elektromotorisch antreibbare Kühlmittelpumpe 80 sowie ein Zusatzkühler 82, der der Rückkühlung des den Kühlkreis des Nebenkühlsystems durchströmenden Kühlmittels durch einen Übergang von Wärmeenergie auf den Zusatzkühler 82 durchströmende Umgebungsluft dient, integriert. Der Zusatzkühler 82 ist mittels eines Bypasses 84 umgehbar, wobei eine Aufteilung des den Kühlkreis des Nebenkühlsystems durchströmenden Kühlmittels auf entweder den Zusatzkühler 82 oder den dazugehörigen Bypass 84 mittels einer siebten Steuervorrichtung 86, die als Thermostatventil oder als mittels einer Steuerungseinheit ansteuerbares Steuerventil ausgebildet sein kann, veränderbar ist.

Die Temperatur des Kühlmittels kann während eines regulären Betriebs der Brennkraftmaschine 10 in dem Hauptkühlsystem zumindest abschnittsweise deutlich höher als in dem Nebenkühlsystem sein, so dass ersteres auch als Hochtemperaturkühlsystem und letzteres als Niedertemperaturkühlsystem bezeichnet werden kann.

Das Kühlsystem umfasst weiterhin einen Ausgleichsbehälter 88, der teilweise mit dem Kühlmittel und teilweise mit Luft gefüllt ist. Über eine Verbindungsleitung 90, die aus einem das Kühlmittel aufnehmenden (unteren) Abschnitt des Ausgleichsbehälters 88 abgeht, ist der Ausgleichsbehälter 88 sowohl mit dem Hauptkühlkreis des Hauptkühlsystems als auch mit dem Kühlkreis des Nebenkühlsystems fluidleitend verbunden. Weiterhin verbinden Entlüftungsleitungen 92, unter Zwischenschaltung entweder einer oder mehrerer Rückschlagventile 94 oder einer Drossel 64, den HD-AGR-Kühler 40, den Hauptkühler 42, den Kühlkanal 28 des Zylinderkopfs 18 sowie den Ladeluftkühler 78 mit dem die Luft aufnehmenden (oberen) Abschnitt des Ausgleichsbehälters 88.

Das Hauptkühlsystem des Kühlsystems gemäß der Fig. 1 kann beispielsweise folgendermaßen betrieben werden.

Während einer Warmlaufphase, insbesondere nach einem Kaltstart des Verbrennungsmotors, wenn folglich das Kühlmittel im gesamten Kühlsystem eine relativ niedrige Temperatur aufweist, kann vorgesehen sein, die Hauptkühlmittelpumpe 46 nicht zu betreiben, wodurch oder wobei diese zudem abgeschaltet ist und folglich nicht durchströmt werden kann. Gleichzeitig kann während dieser Warmlaufphase die erste Zusatzkühlmittelpumpe 48 (mit variabler Förderleistung) betrieben werden, wodurch Kühlmittel (in Verbindung mit einer unterbrechenden Stellung der vierten Steuervorrichtung 62) in dem ersten Nebenkühlkreis gefördert wird. Das Kühlmittel durchströmt dabei den in die Nebenstrecke des ersten Nebenkühlkreises integrierten ATL-Kühler 34, den ND-AGR-Kühler 38 und den Heizungswärmetauscher 44. Weiterhin durchströmt dieses Kühlmittel (vollständig) den ebenfalls einen Abschnitt des ersten Nebenkühlkreises darstellenden Bypass 52 zu dem Hauptwasserkühler 42 (infolge einer entsprechenden Stellung der dritten Steuervorrichtung 60), weiterhin die Nebenstrecke des dritten Nebenkühlkreises (in einer Strömungsrichtung, die zu derjenigen in einem Regelbetrieb entgegengesetzt ist; vgl. Pfeilspitze ohne Füllung), wobei eine Durchströmung des Motorölkühlers 30 optional durch die Integration eines entsprechenden Bypasses (nicht dargestellt) in diese Nebenstrecke verhindert sein kann, sowie den Kühlkanal 28 des Zylinderkopfs18. Eine Durchströmung auch des Kühlkanals 26 des Zylindergehäuses 14, mit Ausnahme einer relativ kleinen Pilotströmung zur Temperierung der als Thermostatventil ausgebildeten ersten Steuervorrichtung 54, ist dabei in der Regel durch entsprechende Stellungen der ersten Steuervorrichtung 54 und der zweiten Steuervorrichtung 56 verhindert. In Ausnahmesituationen, insbesondere wenn trotz der Warmlaufphase ein Betrieb des Verbrennungsmotors 12 mit hohen Lasten, insbesondere Volllast, vorgesehen ist, kann aber auch vorgesehen sein, die zweite Steuervorrichtung 56 mittels der Steuerungsvorrichtung 58 in eine freigebende Stellung zu verstellen, um auch eine Durchströmung des Kühlkanals 26 des Zylindergehäuses 14 zu gewährleisten. In Abhängigkeit von der Temperatur des den ersten Nebenkühlkreis durchströmenden Kühlmittels wird während der Warmlaufphase mittels der fünften Steuervorrichtung 66 eine Durchströmung der Nebenstrecke des vierten Nebenkühlkreises und folglich des Getriebeölkühlers 32 zumindest anfangs verhindert.

Infolge der Durchströmung des ebenfalls einen Abschnitt des ersten Nebenkühlkreises darstellenden Kühlkanals 28 des Zylinderkopfs 18 wird auch der zweite Nebenkühlkreis mit dem darin integrierten Kühler (Kühlkanal) für das Abgasrückführventil 36 durchströmt.

Während der Warmlaufphase ist weiterhin vorgesehen, dass die sechste Steuervorrichtung 68 derart eingestellt ist, dass Kühlmittel mittels der hierzu betriebenen zweiten

Zusatzkühlmittelpumpe 50 in dem im Übrigen lediglich noch den HD-AGR-Kühler 40 sowie die Kurzschlussleitung 70 umfassenden Kurzschlusskreis gefördert wird.

Während eines Regelbetriebs der Brennkraftmaschine 10 wird die Hauptkühlmittelpumpe 46 (mit variabler spezifischer Förderleistung) betrieben und Kühlmittel zumindest zeitweise in sämtlichen der Kühlkreise des Hauptkühlsystems gefördert. Die zwei Zusatzkühlmittelpumpen 48, 50 des Hauptkühlsystems können dabei bedarfsweise zur Unterstützung der Hauptkühlmittelpumpe 46 ebenfalls betrieben werden. Für die zweite Zusatzkühlmittelpumpe 50 gilt dies jedoch erst, nachdem die sechste Steuervorrichtung 68 derart umgeschaltet hat, dass eine Strömung von Kühlmittel in dem fünften Kühlkreis zugelassen ist. Bevor dies vorgesehen ist, wird die zweite Zusatzkühlmittelpumpe 50 betrieben, um Kühlmittel (auch noch während eines Regelbetriebs der Brennkraftmaschine 10) innerhalb des Kurzschlusskreises zu fördern.

Während eines Regelbetriebs der Brennkraftmaschine 10 wird der Hauptkühlkreis permanent durchströmt, wobei stets eine Durchströmung des Kühlkanals 28 des Zylinderkopfs 18 vorgesehen ist, wohingegen eine Durchströmung auch des Kühlkanals 26 des Zylindergehäuses 14 (sofern nicht in Ausnahmesituationen die zweite Steuervorrichtung 56 in die freigebende Stellung verstellt ist) erst mittels der ersten Steuervorrichtung 54 freigegeben wird, wenn die Temperatur des Kühlmittels in dem Kühlkanal 26 des Zylindergehäuses 14 die Temperatur von ca. 105°C erreicht hat.

Mittels der dritten Steuervorrichtung 60 erfolgt während des Regelbetriebs der Brennkraftmaschine 10 weiterhin eine variable Aufteilung des den Hauptkühlkreis durchströmenden Kühlmittels auf entweder den Hauptkühler 42 oder den dazugehörigen Bypass 52, wodurch eine Solltemperatur für das den Kühlkanal 28 des Zylinderkopfs 18 verlassende Kühlmittel von ca. 90°C eingestellt werden kann.

Während des Regelbetriebs der Brennkraftmaschine 10 wird zudem der erste Nebenkühlkreis mit dem darin integrierten ATL-Kühler 34, dem ND-AGR-Kühler 38 und dem Heizungswärmetauscher 44 permanent durchströmt. Durch einen angepassten Betrieb der ersten Zusatzkühlmittelpumpe 48 kann dabei der Volumenstrom des Kühlmittels durch den Nebenstrang des ersten Nebenkühlkreises auch in Überlagerung zu der Förderleistung der Hauptkühlmittelpumpe 46 angepasst werden. Dies kann insbesondere zur Erzielung eines ausreichenden Wärmeübergangs in dem Heizungswärmetauscher 44 und damit einer ausreichenden Heizfunktionalität für die Innenraumheizung eines die Brennkraftmaschine 10 umfassenden Kraftfahrzeugs relevant sein.

Auch der zweite Nebenkühlkreis mit dem darin integrierten Kühler (Kühlkanal) für das Abgasrückführventil 36 und der dritte Nebenkühlkreis mit dem darin integrierten Motorölkühler 30 werden permanent durchströmt.

Für den vierten Nebenkühlkreis mit dem darin integrierten Getriebeölkühler 32 gilt dies dagegen nur dann, sofern die Temperatur des an der ebenfalls in die Nebenstrecke des vierten Nebenkühlkreises integrierten fünften Steuervorrichtung 66 anliegenden Kühlmittels mindestens 75°C beträgt, so dass dann die fünfte Steuervorrichtung 66 (temperaturabhängig variabel) eine Durchströmung auch des Getriebeölkühlers 32 zulässt. Auch hier kann in der verschließenden Stellung eine relativ kleine Pilotströmung zur Temperierung der als Thermostatventil ausgebildeten fünften Steuervorrichtung 66 vorgesehen sein.

Auch der fünfte Nebenkühlkreis wird nur dann durchströmt, wenn die Temperatur des zuvor in dem Kurzschlusskreis geförderten Kühlmittels mindestens die dazugehörige Grenztemperatur, die zwischen 70°C und 80°C liegen kann, erreicht hat. Sobald die sechste Steuervorrichtung 68 eine zumindest teilweise Durchströmung des fünften Kühlkreises freigegeben hat, wird der HD-AGR-Kühler 40 permanent mit Kühlmittel beaufschlagt, dessen Temperatur im Wesentlichen derjenigen entspricht, die im Auslass des Kühlkanals 28 des Zylinderkopfs 18 erreicht wurde und die insbesondere ca. 90°C betragen kann.

Für den Kühlkanal 26 des Zylindergehäuses 14, für die Nebenstrecke des vierten Nebenkühlkreises und damit den Getriebeölkühler 32 sowie für die Nebenstrecke des AGR-Kühlkreises gilt, dass die jeweilige Durchströmung mittels der entsprechenden Steuervorrichtungen 54, 66, 68 wieder unterbrochen werden kann, sofern die jeweils zugehörige Grenz- beziehungsweise Öffnungstemperatur unterschritten worden ist.

Eine Durchströmung des Kühlkreises des Nebenkühlsystems wird mittels der darin integrierten Kühlmittelpumpe 80 bedarfsgerecht und unabhängig von den Steuerungen/Regelungen des Hauptkühlsystems bewirkt.

Das Kühlsystem der Brennkraftmaschine 10 ermöglicht auch eine Nachheizfunktionalität bei nicht mehr betriebenem Verbrennungsmotor 12, indem Kühlmittel mittels der ersten Zusatzkühlmittelpumpe 48 in dem dann gegebenenfalls auch den Hauptkühler 42 umfassenden ersten Nebenkühlkreis gefördert wird, wodurch die noch in insbesondere dem Hauptkühler 42, dem Zylinderkopf 18 und dem ND-AGR-Kühler 38 enthaltene Wärmeenergie in dem Heizungswärmetauscher 44 zur Temperierung des Innenraums eines die Brennkraftmaschine 10 umfassenden Kraftfahrzeugs genutzt werden kann.

Weiterhin ermöglicht das Kühlsystem auch eine Nachkühlfunktionalität bei nicht mehr betriebenem, zuvor thermisch hoch belastetem Verbrennungsmotor 12, indem Kühlmittel mittels der ersten Zusatzkühlmittelpumpe 48 in dem dann auch den Hauptkühler 42 umfassenden ersten Nebenkühlkreis gefördert wird, wodurch die thermisch kritischen Komponenten des Kühlsystems, insbesondere der Zylinderkopf 18 und der Abgasturbolader 20 (mittels des ATL-Kühlers 34) und der ND-AGR-Kühler 38, nachgekühlt werden können.

Diese Nachkühlfunktionalität kann insbesondere in Verbindung mit einer automatischen Stoppfunktion für den Verbrennungsmotor 12 relevant sein. Durch die automatische Stoppfunktion wird der Verbrennungsmotor 12 im Betrieb der Brennkraftmaschine 10 beziehungsweise des die Brennkraftmaschine 10 umfassenden Kraftfahrzeugs automatisch abgeschaltet, sofern von diesem keine Antriebsleistung erzeugt werden soll. Um während einer aktivierten Stoppfunktion und folglich im Nichtbetrieb des Verbrennungsmotors 12 eine lokale thermische Überlastung des Hauptkühlsystems und der darin integrierten Komponenten, insbesondere des Verbrennungsmotors 12, des ND-AGR-Kühlers 38 und des ATL-Kühlers 34, die im besonderen Maße in dem vorausgegangenen Betrieb des Verbrennungsmotors 12 thermisch hoch belastet gewesen sein können, zu vermeiden, ist vorgesehen, Kühlmittel durch einen Betrieb der ersten Zusatzkühlmittelpumpe 48 in dem ersten Nebenkühlkreis zu fördern. Je nach Stellungen der Steuervorrichtungen 66, 68 und der Schaltstellung für die Durchlässigkeit der Hauptkühlmittelpumpe 46 können dabei auch der Getriebeölkühler 32, der Motorölkühler 30, die Hauptkühlmittelpumpe 46 sowie die Kühlkanäle 26 des Zylindergehäuses 14 durchströmt werden. Teilweise ist die Richtung der Durchströmung (vgl. Richtungspfeile ohne Füllung in der Fig. 2) dabei umgekehrt im Vergleich zu der Richtung der Durchströmung (vgl. Richtungspfeile mit Füllung in der Fig. 2) während eines Betriebs des Verbrennungsmotors 12. Während des Nachkühlens kann vorgesehen sein, das gesamte in dem ersten Nebenkühlkreis strömende Kühlmittel über den Hauptkühler 42 zu führen. Mittels der dritten Steuervorrichtung 60 kann jedoch auch ein variabler Anteil (bis hin zur Gesamtmenge) dieses Kühlmittel über den Bypass 52 geführt werden. Dadurch kann insbesondere ein zu starkes Auskühlen des Kühlmittels bei einem länger andauernden Nichtbetrieb des Verbrennungsmotors 12 infolge einer aktivierten Stoppfunktion vermieden werden.

Alternativ oder ergänzend ist vorgesehen, dass das Kühlmittel während eines Nichtbetriebs des Verbrennungsmotors 12 infolge einer aktivierten Stoppfunktion mittels der Kühlmittelpumpe 80 auch in dem Kühlkreis des Nebenkühlsystems gefördert wird, wodurch eine zu starke Erwärmung des Ladeluftkühlers 78 vermieden wird. Bei einer erneuten Inbetriebnahme des Verbrennungsmotors 12 infolge einer manuellen oder automatischen Deaktivierung der automatischen Stoppfunktion kann der Ladeluftkühler 78 dadurch wieder unmittelbar eine ausreichende Kühlleistung für die dem Verbrennungsmotor 12 zuzuführende Ladeluft aufbringen, so dass diese den Brennräumen des Verbrennungsmotors 12 in dem dafür vorgesehenen Temperaturbereich zugeführt wird. Mittels der siebten Steuervorrichtung 86 kann dabei variiert werden, welcher Anteil des in dem Kühlkreis des Nebenkühlsystems strömenden Kühlmittels über den Zusatzkühler 82 oder über den dazugehörigen Bypass 84 geführt wird, um einerseits eine ausreichende Kühlleistung für insbesondere den Ladeluftkühler 78 zu erreichen und andererseits ein zu starkes Auskühlen des Kühlmittels zu vermeiden.

Weiterhin ist für die Brennkraftmaschine 10 vorgesehen, dass bei bestimmten instationären Betriebszuständen des Verbrennungsmotors 12, konkret bei einer Erhöhung der Lastanforderung, die an den Betrieb des Verbrennungsmotors 12 gestellt wird, um mindestens 20% bezogen auf die Volllast, die Temperatur des in dem Kühlkreis des Nebenkühlsystems strömenden Kühlsystems um beispielsweise ca. 20°C im Vergleich zu dem vorausgegangenen stationären Betrieb abgesenkt wird, um mittels einer so realisierten Erhöhung der Kühlleistung des Ladeluftkühlers 78 eine verbesserte Füllung der Brennräume des Verbrennungsmotors 12 und daraus folgend einen verbesserten Laderdruckaufbau zu erzielen, wodurch das dynamische Betriebsverhalten des Verbrennungsmotors 12 verbessert wird.

Um die Temperatur des in dem Kühlkreis des Nebenkühlsystems strömenden Kühlmittels zu senken, wird, sofern dies möglich ist, ein erhöhter Anteil des an der siebten Steuervorrichtung 86 ankommenden Kühlmittels über den Zusatzkühler 82 geführt. Weiterhin kann vorgesehen sein, ein dem Zusatzkühler 82 zugeordnetes Gebläse 106 in Betrieb zu nehmen oder dessen Antriebsleistung zu erhöhen, wodurch die Kühlleistung des Zusatzkühlers 82 gesteigert werden kann.

In den Abgasstrang 76 der Brennkraftmaschine 10 ist weiterhin ein NOₓ-Speicherkatalysator 100 sowie ein Partikelfilter 102 integriert. Der NOx-Speicherkatalysator 100 dient dazu, im Abgas enthaltene Stickoxide zu speichern, wenn diese nicht in ausreichendem Maße durch das eingebrachte Reduktionsmittel in Kombination mit einem nicht dargestellten Reduktionsbeziehungsweise SCR-Katalysator reduziert werden können. Dies kann beispielsweise nach einem Kaltstart der Brennkraftmaschine 10 oder bei einem relativ lange andauernden Betrieb des Verbrennungsmotors 12 mit niedrigen Lasten und Drehzahlen der Fall sein, wodurch der SCR-Katalysator noch nicht oder nicht mehr eine für eine ausreichende Reduktion erforderliche Betriebstemperatur aufweist. Der Partikelfilter 102 dient dagegen dazu, Partikel aus dem Abgas herauszufiltern.

Sowohl für den NOₓ-Speicherkatalysator 100 als auch für den Partikelfilter 102 gilt, dass diese beim Erreichen einer definierten Beladungsgrenze regeneriert werden müssen, um deren Funktionsfähigkeit aufrecht zu erhalten. Bei einem NOₓ-Speicherkatalysator 100 kommt hinzu, dass dieser in regelmäßigen Abständen entschwefelt werden muss, weil der üblicherweise im Kraftstoff enthaltene Schwefel mit dem Speichermaterial des NOₓ-Speicherkatalysators 100 reagiert, wodurch die für die Speicherung der Stickoxide verfügbare Menge an Speichermaterial abnimmt. Zur Entschwefelung muss der NOₓ-Speicherkatalysator 100 unter anderem durch gezielte Maßnahmen auf eine Temperatur, die zwischen 600°C und 650°C liegt, aufgeheizt werden. Vergleichbare Temperaturen sind auch für eine Regeneration des Partikelfilters 102 erforderlich.

Das Aufheizen des NOₓ-Speicherkatalysators 100 und des Partikelfilters 102 auf die für eine Entschwefelung beziehungsweise Regeneration erforderlichen Temperaturen erfolgt durch eine entsprechende Erhöhung der Temperatur des Abgases, wofür verschiedene, grundsätzlich bekannte, insbesondere innermotorische Maßnahmen vorgesehen sind.

Während die Temperatur des Abgases in entsprechender Weise erhöht ist, um die Entschwefelung NOₓ-Speicherkatalysators 100 und die Regeneration des Partikelfilters 102 zu bewirken, wird eine im relevanten Ausmaß erhöhte thermische Leistung in den Verbrennungsmotor 12 (insbesondere direkt aufgrund der die Erhöhung der Temperatur des Abgases bewirkenden innermotorischen Maßnahmen) sowie in das gesamte Hauptkühlsystem oder zumindest in einen oder mehrere Abschnitte davon, nämlich einerseits über den Verbrennungsmotor 12 und andererseits über die beiden AGR-Kühler 38, 40, eingebracht.

Um eine lokale thermische Überlastung des Kühlsystems insbesondere im Bereich des Verbrennungsmotors 12 zu vermeiden (dabei soll insbesondere ein Sieden des Kühlmittels vermieden werden), ist vorgesehen, kurzzeitig vor sowie zumindest zeitweise während einer für die Entschwefelung des NOₓ-Speicherkatalysators 100 und/oder der Regeneration des Partikelfilters 102 vorgesehenen Erhöhung der Temperatur des Abgases eine Temperatur des Kühlmittels, konkret desjenigen Kühlmittels, das anschließend über die Hauptkühlmittelpumpe 46 in den Verbrennungsmotor 12 geleitet werden soll, abzusenken, um die erhöhte thermische Belastung des Verbrennungsmotors 12 sowie des Hauptkühlsystems infolge der Erhöhung der Temperatur des Abgases zu kompensieren. Die Temperatur des Kühlmittels wird dabei mittels eines Temperatursensors 104, der in den Austritt des Kühlkanals 28 des Zylinderkopfs 18 integriert ist, gemessen.

Um die Temperatur des in den Verbrennungsmotor 12 einströmenden Kühlmittels zu senken, wird, sofern dies möglich ist, ein erhöhter Anteil des an der dritten Steuervorrichtung 60 ankommenden Kühlmittels über den Hauptkühler 42 geführt. Weiterhin kann vorgesehen sein, ein dem Hauptkühler 42 zugeordnetes Gebläse 106 in Betrieb zu nehmen oder dessen Antriebsleistung zu erhöhen, wodurch die Kühlleistung des Hauptkühlers 42 gesteigert werden kann.

Kurzzeitig vor, zeitgleich oder kurzfristig nachdem die als Maßnahme für die Entschwefelung des NOₓ-Speicherkatalysators 100 und/oder für die Regeneration des Partikelfilters 102 vorgesehene Erhöhung der Temperatur des Abgases beendet wird, wird auch die Absenkung der Temperatur des Kühlmittels beendet beziehungsweise rückgängig gemacht, um eine zu starke Kühlung der in das Hauptkühlsystem integrierten Komponenten durch das Kühlmittel zu vermeiden.

### BEZUGSZEICHENLISTE

- 10: Brennkraftmaschine
- 12: Verbrennungsmotor
- 14: Zylindergehäuse
- 16: Zylinder
- 18: Zylinderkopf
- 20: Abgasturbolader
- 22: Abgasrückführleitung der Niederdruck-Abgasrückführung
- 24: Abgasrückführleitung der Hochdruck-Abgasrückführung
- 26: Kühlkanal des Zylindergehäuses
- 28: Kühlkanal des Zylinderkopfs
- 30: Motorölkühler
- 32: Getriebeölkühler
- 34: ATL-Kühler
- 36: Abgasrückführventil
- 38: ND-AGR-Kühler
- 40: HD-AGR-Kühler
- 42: Umgebungswärmetauscher/ Hauptkühler
- 44: Heizungswärmetauscher
- 46: Hauptkühlmittelpumpe
- 48: erste Zusatzkühlmittelpumpe
- 50: zweite Zusatzkühlmittelpumpe
- 52: Bypass zum Hauptkühler
- 54: erste Steuervorrichtung
- 56: zweite Steuervorrichtung
- 58: Steuerungsvorrichtung
- 60: dritte Steuervorrichtung
- 62: vierte Steuervorrichtung
- 64: Drossel
- 66: fünfte Steuervorrichtung
- 68: sechste Steuervorrichtung
- 70: Kurzschlussleitung
- 72: Dosierventil
- 74: Frischgasstrang
- 76: Abgasstrang
- 78: Ladeluftkühler
- 80: Kühlmittelpumpe des Nebenkühlsystems
- 82: Umgebungswärmetauscher/Zusatzkühler
- 84: Bypass zum Zusatzkühler
- 86: siebte Steuervorrichtung
- 88: Ausgleichsbehälter
- 90: Verbindungsleitung
- 92: Entlüftungsleitung
- 94: Rückschlagventil
- 96: Abgasturbine des Abgasturboladers
- 98: Verdichter des Abgasturboladers
- 100: NOₓ-Speicherkatalysator
- 102: Partikelfilter
- 104: Temperatursensor
- 106: Gebläse
- 108: Kühlmittelverteilermodul

## Patentansprüche

1. Verfahren zum Betreiben einer Brennkraftmaschine (10) mit einem Verbrennungsmotor (12), einem Frischgasstrang (74), einem Abgasstrang (76) und einem einen Umgebungswärmetauscher (42) sowie einen Kühlkanal (26, 28) des Verbrennungsmotors (12) umfassenden Kühlsystem, wobei in den Abgasstrang (76) ein NOₓ-Speicherkatalysator (100) und/oder ein Partikelfilter (102) integriert ist und wobei als Maßnahme für eine Entschwefelung des NOₓ-Speicherkatalysators (100) und/oder für eine Regeneration des Partikelfilters (102) temporär die Temperatur des den Abgasstrang (76) durchströmenden Abgases auf mindestens einen hierfür erforderlichen Mindestwert eingestellt wird, **dadurch gekennzeichnet, dass** vor und/oder während der Maßnahme für die Entschwefelung des NOₓ-Speicherkatalysators (100) und/oder für die Regeneration des Partikelfilters (102) durch eine Erhöhung der Kühlleistung für das in dem Kühlsystem strömende Kühlmittel die Temperatur des Kühlmittels an einer Stelle stromab des Umgebungswärmetauschers (42) und/oder stromauf des Verbrennungsmotors (12) auf einen Wertebereich abgesenkt wird, der unterhalb dessen liegt, was an dieser Stelle ohne die Maßnahme für die Entschwefelung des NOₓ-Speicherkatalysators (100) und/oder für die Regeneration des Partikelfilters (102) in einem entsprechenden Betriebszustand des Verbrennungsmotors (12) vorgesehen ist.

2. Verfahren gemäß Anspruch 1, **dadurch gekennzeichnet, dass** das Bewirken einer Absenkung der Temperatur des Kühlmittels vor oder mit oder nach dem Beenden der Maßnahme für die Entschwefelung des NOₓ-Speicherkatalysators (100) und/oder für die Regeneration des Partikelfilters (102) beendet wird.

3. Verfahren gemäß Anspruch 1 oder 2, **dadurch gekennzeichnet, dass** während der Maßnahme für die Entschwefelung des NOₓ-Speicherkatalysators (100) und/oder für die Regeneration des Partikelfilters (102) Abgas über eine Abgasrückführleitung (22, 24), die einen in das Kühlsystem integrierten AGR-Kühler (38, 40) umfasst, geleitet wird.

4. Verfahren gemäß Anspruch 3, **dadurch gekennzeichnet, dass** das Absenken der Temperatur des Kühlmittels nur dann durchgeführt wird, wenn das Abgas in einem Mengenstromanteil, der oberhalb eines definierten Grenzwerts liegt, über die Abgasrückführleitung (22, 24) geführt wird.

5. Verfahren gemäß einem der vorhergehenden Ansprüchen 3 oder 4, **dadurch gekennzeichnet, dass** das Ausmaß, mit dem das Absenken der Temperatur des Kühlmittels durchgeführt wird, in Abhängigkeit von dem Mengenstromanteil des Abgases, der über die Abgasrückführleitung (22, 24) geführt wird, variiert wird.

6. Verfahren gemäß einem der vorhergehenden Ansprüche, **dadurch gekennzeichnet, dass** das Absenken der Temperatur des Kühlmittels
- durch eine Erhöhung desjenigen Anteils des Kühlmittels, der über den Umgebungswärmetauscher (42) geführt wird, im Vergleich zu demjenigen Anteil, der über einen den Umgebungswärmetauscher (42) umgehenden Bypass (52) geführt wird, und/oder
- durch eine Erhöhung der Förderleistung eines dem Umgebungswärmetauscher (42) zugeordneten Gebläses (106)
bewirkt wird.

7. Brennkraftmaschine (10) mit einem Verbrennungsmotor (12), einem Frischgasstrang (74), einem Abgasstrang (76) und einem einen Umgebungswärmetauscher (42) sowie einen Kühlkanal (26, 28) des Verbrennungsmotors (12) umfassenden Kühlsystem, wobei in den Abgasstrang (76) ein NOₓ-Speicherkatalysator (100) und/oder ein Partikelfilter (102) integriert ist, **gekennzeichnet durch** eine Steuerungsvorrichtung (58), die derart ausgebildet ist, dass diese ein Verfahren gemäß einem der vorhergehenden Ansprüche ausführen kann.

8. Brennkraftmaschine gemäß Anspruch 7, **gekennzeichnet durch** eine Abgasrückführleitung (22, 24), die einen in das Kühlsystems integrierten AGR-Kühler (38, 40) umfasst.

9. Kraftfahrzeug mit einer Brennkraftmaschine (10) gemäß Anspruch 7 oder 8.

## Claims

1. Method for operating a combustion machine (10) having an internal combustion engine (12), a fresh-gas tract (74), an exhaust-gas tract (76) and a cooling system which comprises a surroundings heat exchanger (42) and a cooling channel (26, 28) of the internal combustion engine (12), wherein a NOx storage catalytic converter (100) and/or a particle filter (102) are integrated into the exhaust-gas tract (76), and wherein, as a measure for desulphurizing the NOx storage catalytic converter (100) and/or for regenerating the particle filter (102), the temperature of the exhaust gas flowing through the exhaust-gas tract (76) is temporarily set to at least a minimum value required for this, **characterized in that**, before and/or during the measure for desulphurizing the NOx storage catalytic converter (100) and/or for regenerating the particle filter (102), by means of an increase of the cooling power for the coolant flowing in the cooling system, the temperature of the coolant at a location downstream of the surroundings heat exchanger (42) and/or upstream of the internal combustion engine (12) is lowered to a value range which lies below that which is provided at said location without the measure for desulphurizing the NOx storage catalytic converter (100) and/or for regenerating the particle filter (102) in a corresponding operating state of the internal combustion engine (12).

2. Method according to Claim 1, **characterized in that** the implementation of a lowering of the temperature of the coolant is ended before or upon or after the ending of the measure for desulphurizing the NOx storage catalytic converter (100) and/or for regenerating the particle filter (102).

3. Method according to Claim 1 or 2, **characterized in that**, during the measure for desulphurizing the NOx storage catalytic converter (100) and/or for regenerating the particle filter (102), exhaust gas is conducted via an exhaust-gas recirculation line (22, 24) which comprises an EGR cooler (38, 40) integrated into the cooling system.

4. Method according to Claim 3, **characterized in that** the lowering of the temperature of the coolant is performed only if the exhaust gas is conducted with a flow rate fraction lying above a defined threshold value via the exhaust-gas recirculation line (22, 24) .

5. Method according to either of the preceding Claims 3 and 4, **characterized in that** the extent to which the lowering of the temperature of the coolant is performed is varied in a manner dependent on the flow rate fraction of the exhaust gas that is conducted via the exhaust-gas recirculation line (22, 24).

6. Method according to any of the preceding claims, **characterized in that** the lowering of the temperature of the coolant is implemented
- by means of an increase of that fraction of the coolant which is conducted via the surroundings heat exchanger (42) in relation to that fraction which is conducted via a bypass (52) which circumvents the surroundings heat exchanger (42), and/or
- by means of an increase of the delivery rate of a fan (106) assigned to the surroundings heat exchanger (42).

7. Combustion machine (10) having an internal combustion engine (12), a fresh-gas tract (74), an exhaust-gas tract (76) and a cooling system which comprises a surroundings heat exchanger (42) and a cooling channel (26, 28) of the internal combustion engine (12), wherein a NOx storage catalytic converter (100) and/or a particle filter (102) are integrated into the exhaust-gas tract (76), **characterized by** a control device (58) which is designed such that it can carry out a method according to any of the preceding claims.

8. Combustion machine according to Claim 7, **characterized by** an exhaust-gas recirculation line (22, 24) which comprises an EGR cooler (38, 40) integrated into the cooling system.

9. Motor vehicle having a combustion machine (10) according to Claim 7 or 8.

## Revendications

1. Procédé de fonctionnement d'un moteur à combustion interne (10) comprenant un moteur thermique (12), une ligne de gaz frais (74), une ligne de gaz d'échappement (76) et un système de refroidissement comprenant un échangeur de chaleur ambiante (42) et un conduit de refroidissement (26, 28) du moteur thermique (12), un convertisseur catalytique à stockage de NOx (100) et/ou un filtre à particules (102) étant intégrés dans la ligne de gaz d'échappement (76) et
la température des gaz d'échappement s'écoulant à travers la ligne de gaz d'échappement (76) étant réglée temporairement à au moins une valeur minimale requise à cet effet comme mesure prise pour la désulfuration du convertisseur catalytique à stockage de NOx (100) et/ou pour la régénération du filtre à particules (102), **caractérisé en ce que,** avant et/ou pendant la mesure prise pour la désulfuration du convertisseur catalytique à stockage de NOx (100) et/ou pour la régénération du filtre à particules (102), la température de l'agent de refroidissement en un point situé en aval de l'échangeur de chaleur ambiante (42) et/ou en amont du moteur thermique (12) est abaissée, par augmentation de la capacité de refroidissement de l'agent de refroidissement s'écoulant dans le système de refroidissement, à une plage de valeurs qui est inférieure à ce qui est prévu à ce point sans la mesure prise pour la désulfuration du convertisseur catalytique à stockage de NOx (100) et/ou pour la régénération du filtre à particules (102) dans un état de fonctionnement correspondant du moteur thermique (12) .

2. Procédé selon la revendication 1, **caractérisé en ce que** l'effet d'abaissement de la température de l'agent de refroidissement se termine avant ou avec ou après la fin de la mesure prise pour la désulfuration du convertisseur catalytique à stockage de NOx (100) et/ou pour la régénération du filtre à particules (102) .

3. Procédé selon la revendication 1 ou 2, **caractérisé en ce que,** lors de la mesure prise pour la désulfuration du convertisseur catalytique à stockage de NOx (100) et/ou pour la régénération du filtre à particules (102), des gaz d'échappement sont guidés par une ligne de recirculation de gaz d'échappement (22, 24), qui comprend un refroidisseur EGR (38, 40) intégré dans le système de refroidissement.

4. Procédé selon la revendication 3, **caractérisé en ce que** l'abaissement de la température de l'agent de refroidissement n'est effectué que lorsque les gaz d'échappement sont guidés dans la ligne de recirculation de gaz d'échappement (22, 24) dans une fraction de débit massique supérieure à une valeur limite définie.

5. Procédé selon l'une des revendications précédentes 3 et 4, **caractérisé en ce que**
le degré auquel l'abaissement de la température de l'agent de refroidissement est effectué est modifié en fonction de la fraction de débit massique des gaz d'échappement qui sont guidés par la ligne de recirculation de gaz d'échappement (22, 24).

6. Procédé selon l'une des revendications précédentes, **caractérisé en ce que** l'abaissement de la température de l'agent de refroidissement est effectué
- par augmentation de la proportion d'agent de refroidissement qui est guidée par l'échangeur de chaleur ambiante (42) par rapport à la proportion qui est guidée par une dérivation (52) contournant l'échangeur de chaleur ambiante (42), et/ou
- par augmentation de la capacité de refoulement d'un ventilateur (106) associé à l'échangeur de chaleur ambiante (42).

7. Moteur à combustion interne (10) comprenant un moteur thermique (12), une ligne de gaz frais (74), une ligne de gaz d'échappement (76) et un système de refroidissement comprenant un échangeur de chaleur ambiante (42) et un conduit de refroidissement (26, 28) du moteur thermique (12), un convertisseur catalytique à stockage de NOx (100) et/ou un filtre à particules (102) étant intégrés dans la ligne de gaz d'échappement (76), **caractérisé par** un dispositif de commande (58) qui est conçu de manière à pouvoir mettre en œuvre un procédé selon l'une des revendications précédentes.

8. Moteur à combustion interne selon la revendication 7, **caractérisé par** une ligne de recirculation de gaz d'échappement (22, 24) qui comprend un refroidisseur EGR (38, 40) intégré dans le système de refroidissement.

9. Véhicule automobile comprenant un moteur à combustion interne (10) selon la revendication 7 ou 8.
